# EUROPÄISCHE PATENTSCHRIFT

(11) **EP 2 359 988 B1**
(45) Veröffentlichungstag und Bekanntmachung des Hinweises auf die Patenterteilung: **28.11.2012**
(21) Anmeldenummer: 10015263.6
(22) Anmeldetag: 03.12.2010
(51) Int. Cl.: B25J 9/16

(54) **Verfahren zum Kalibrieren eines Parallelroboters**
Method for calibrating a parallel robot
Méthode pour calibrer un robot parallèle

(30) Priorität: 09.12.2009 DE 102009057585
(43) Veröffentlichungstag der Anmeldung: 24.08.2011
(73) Patentinhaber: Multivac Sepp Haggenmüller GmbH & Co. KG, 87787 Wolfertschwenden (DE)
(72) Erfinder: Wörz, Norbert, 87746 Erkheim (DE)
(74) Vertreter: Grünecker, Kinkeldey, Stockmair & Schwanhäusser

(56) Entgegenhaltungen:
- WO-A1-2008/092710
- JP-A- 2009 255 197
- SAVOURE L ET AL: "An improved method for the geometrical calibration of parallelogram-based parallel robots", ROBOTICS AND AUTOMATION, 2006. ICRA 2006. PROCEEDINGS 2006 IEEE INTERN ATIONAL CONFERENCE ON ORLANDO, FL, USA MAY 15-19, 2006, PISCATAWAY, NJ, USA,IEEE, 15. Mai 2006 (2006-05-15), Seiten 769-776, XP010921365, DOI: DOI:10.1109/ROBOT.2006.1641803 ISBN: 978-0-7803-9505-3
- MAURINE P ET AL: "A calibration procedure for the parallel robot Delta 4", ROBOTICS AND AUTOMATION, 1996. PROCEEDINGS., 1996 IEEE INTERNATIONAL C ONFERENCE ON MINNEAPOLIS, MN, USA 22-28 APRIL 1996, NEW YORK, NY, USA,IEEE, US, Bd. 2, 22. April 1996 (1996-04-22), Seiten 975-980, XP010162873, DOI: DOI:10.1109/ROBOT.1996.506835 ISBN: 978-0-7803-2988-1

## Beschreibung

Die vorliegende Erfindung bezieht sich auf ein Verfahren gemäß dem Oberbegriff des Anspruchs 1 zum Kalibrieren eines Roboters.

Bei Robotern, vorzugsweise Deltarobotern mit drei oder mehr Achsen, sind üblicherweise Servomotoren und eine nachfolgende Mechanik, beispielsweise die Hauptarme und ihre Lagerung, symmetrisch angeordnet, um eine Kinematiktransformation nicht unnötig kompliziert zu gestalten. Solche Delta-Roboter sind beispielsweise aus der EP0200389A1 oder der EP1293691B1 bekannt.

Nach der Fertigstellung der Montage und Anbindung der Servomotoren an eine übergeordnete Steuerung müssen die Stellungen der Antriebe zu den dazugehörigen Meßsystemen, vorzugsweise Absolutdrehgebem, die sich auf den Achsen der Servomotoren befinden, kalibriert werden. Die Koordinaten bzw. Abmessungen und Lage der Servomotoren, Hauptarme, Unterarmstäbe und Gelenke sind in der Steuerung eingebbar und speicherbar. Um die Antriebe in eine für die Kinematiktransformation bekannte Stellung zu bringen, werden die Hauptarme in die Position gebracht, bei der die Gelenke am äußeren Ende der Hauptarme in der gleichen horizontalen Ebene liegen wie die Achsen der Servomotore. Da sich diese Positionen für den Monteur im freien dreidimensionalen Raum befindet, werden Einstellhilfen genutzt, die an dem Traggestell, an dem die Servomotoren angebracht sind, montiert werden, um als Anschlag für die Hauptarme zu dienen.

Diese Einstellhilfen selbst müssen sehr genau gefertigt werden, sowie das Traggestell für die Servomotore, damit die Montagefläche für die Einstellhilfe zu der Lage eines Servomotors und damit zur Servomotorachse möglichst nur kleinen Toleranzen unterliegt, da Ungenauigkeiten und Toleranzen in diesen Bereichen sich addieren können und zu Abweichungen gegenüber den theoretisch angenommenen und in der Steuerung abgelegten Parametern bzw. Maßen führen.

Diese Abweichungen führen zu Abweichungen in der Lageposition der Positionierplatte, an der Produkte aufgenommen und abgelegt werden, und auch zu Ungenauigkeiten in der Positionierung von Produkten. Des Weiteren kann es zu mechanischen Belastungen an den Gelenken kommen, wenn die Bewegungen nicht wie theoretisch in der Kinematiktransformation berechnet ablaufen.

Alternativ können Einstellhilfen auch an einem Tragrahmen, an dem das Traggestell für die Servomotoren angebracht ist, Anbau- (referenz-)flächen besitzen, die für die Einstellhilfe oder -hilfen vorgesehen sind. Hier ist der Einfluss von Bearbeitungsgenauigkeiten und Toleranzen nicht weniger kritisch. Eine solche Einstellhilfe, die am Traggestell für die Servomotoren eines Delta-Roboters befestigt wird und die Werkzeugplatte des Delta-Roboters starr mit dem Traggestell verbindet, geht aus der JP 2009 255 197 A hervor. Mit dieser Einstellhilfe lässt sich ein Verfahren zum Kalibrieren eines Roboters gemäß dem Oberbegriff des Anspruchs 1 durchführen.

Allen diesen bekannten Vorgängen ist gemeinsam, dass die Kalibrierung über solche Einstellhilfen nicht sehr präzise ist; und vor allem liegt der Nachteil vor, dass die Einstellhilfen üblicherweise nicht mit dem Roboter mitgeliefert werden, sondern vom Servicemonteur vom Werk mitgenommen werden müssen, wenn vor Ort beispielsweise ein Servomotor getauscht und anschließend kalibriert werden muss.

Aufgabe der vorliegenden Erfindung ist es, ein Kalibrierverfahren für Roboter zur Verfügung zu stellen, das die Nachteile des Standes der Technik nicht aufweist.

Gelöst wird diese Aufgabe durch ein Verfahren mit den Merkmalen des Anspruchs 1.

Bei einem Roboter mit einem Traggestell und mindestens drei beweglich relativ zum Traggestell gelagerten Hauptarmen, wobei die vom Traggestell abgewandten äußeren Enden der Hauptarme in unterschiedliche räumliche Stellung relativ zum Traggestell und relativ zueinander bewegbar sind, sind die äußeren Enden jedes Hauptarmes in einem definierten Abstand zu dem äußeren Ende der beiden benachbarten Hauptarme mit Verbindungselementen, die eine gleiche Länge aufweisen, verbindbar. Dabei bilden die äußeren Enden der Hauptarme zwangsweise ein gleichseitiges Dreieck, deren Abmessungen und Koordinaten der Steuerung bekannt sind. So können die Servomotoren ohne Zuhilfenahme von weiteren mechanischen Kalibriervorrichtungen kalibriert werden.

Dabei kann das Traggestell an einem Tragrahmen angebracht oder selbst ein Teil des Tragrahmens sein, der als Einhausung oder Portal ausgebildet ist. An dem Traggestell ist für jeden Hauptarm, der darin gelagert ist, ein Antrieb vorgesehen, vorzugsweise als Servomotor ausgeführt. Alle Servomotoren sind mit einer Steuerung verbunden, die in der Lage ist, die Kinematiktransformation des Roboters umzusetzen. Üblicherweise sind an den Hauptarmen des Roboters Unterarme angebracht, die wiederum gemeinsam an einer Positionierplatte befestigt sind, die in der Lage ist, ein oder mehrere Produkte aufzunehmen und entlang einer gewünschten Bewegungsbahn zu positionieren.

Um eine solche Bewegung der Positionierplatte über die Hauptarme steuern zu können, ist eine Kinematiktransformation in der Steuerung notwendig, und dazu müssen alle Servomotoren bei der Inbetriebnahme sehr genau kalibriert werden. Das bedeutet, dass die Servomotoren in eine der Steuerung bekannte Position bewegt werden und die Stellung des Meßsystems jedes Servomotors in der Position, in der kalibriert wird, von der Steuerung übernommen und mit der Kinematiktransformation in Korrelation gesetzt wird. Anschließend kann der Roboter seine Aufgaben, beispielsweise das Umsetzen von Produkten, übernehmen, ohne dass es zu mechanischen Belastungen oder Kollisionen im mechanischen Aufbau des Roboters kommt.

Dabei ist es vorteilhaft, die an den Servomotoren angebrachten Bremseneinrichtungen zu deaktivieren, so dass die Hauptarme vom Monteur zur Inbetriebnahme manuell bewegbar sind. Alternativ können auch die Servomotoren durch einen Tippbetrieb über Bedientaster und die Steuerung vorzugsweise sehr langsam in eine gewünschte Position verfahren werden.

Als Voraussetzung sollten hierbei zumindest einige Unterarme, meist aus zwei Unterarmstäben bestehend, so weit von den Hauptarmen oder der Positionierplatte trennbar sein, dass eine freie Bewegung der Hauptarme möglich ist. Die Erfindung kann auch so ausgeführt werden, dass die Hauptarme an ihren vom Traggestell abgewandten Seite Gelenke aufweisen, an die Verbindungselemente, die eine gleiche Länge aufweisen, so anbringbar sind, dass ein Verbindungselement zwei benachbarte Hauptarme verbindet und sich zwischen jedem Hauptarm ein Verbindungselement befindet. So entsteht ein in der Ebene der Verbindungselemente beispielsweise bei einem Drei-Achsen-Deltaroboter ein gleichseitiges Dreieck, bei dem alle drei Hauptarme einen gleichen Winkel in Bezug auf die Lagerungen im Traggestell aufweisen.

Über die Abmessungen der Lagerstellen der Hauptarme, der Hauptarme selbst, sowie die Lage der Gelenke und die Länge der Verbindungselemente kann die Kalibrierung der Kinematiktransformation erfolgen.

Die Gelenke sind vorzugsweise als Kugelgelenke ausgeführt, die es ermöglichen, dass die beispielsweise zwei Unterarmstäbe pro Unterarm an dem Hauptarm für den Einsatz im Betrieb des Roboters geeignet sind, und auch Verbindungselemente daran befestigbar sind, um jeweils zwei benachbarte Hauptarme so zu verbinden, dass sich alle Hauptarme in eine für die Kalibrierung definierte und auch möglicherweise vorgegebene Position bringbar sind.

Dabei ist es besonders sinnvoll, als Verbindungselemente die Unterarmstäbe selbst zu verwenden, die zuvor teilweise von den Hauptarmen und teilweise von der Positionierplatte getrennt wurden. Dies bietet den Vorteil, dass keine zusätzlichen Verbindungselemente zum Kalibrieren benötigt werden und somit auch bei einem späteren Serviceeinsatz zum Beispiel zum Austauschen eines Servomotors die Unterarmstäbe verwendet werden können, ohne zusätzliche Verbindungselementen suchen oder bereitstellen zu müssen.

Bei dem erfindungsgemäßen Verfahren werden zumindest einiger Unterarme von den Hauptarmen oder der Positionierplatte getrennt, und werden dann die äußeren Enden der Hauptarme solange zueinander bewegt, bis mittels der Verbindungselemente alle Hauptarme durch das Verbinden jeweils zweier benachbarter Hauptarme verbunden worden sind. Dies führt zu einer eindeutigen gemeinsamen Kalibrierposition aller Hauptarme und somit auch der zugehörigen Servomotoren bzw. deren Meßsysteme. Dabei bilden die Verbindungsstäbe in ihrer gemeinsamen Ebene bei einem Drei-Achsen-Deltaroboter ein gleichseitiges Dreieck

Um die Hauptarme manuell bewegen zu können, werden vorzugsweise an den Servomotoren vorhanden Bremseinrichtungen deaktiviert.

Die Verbindungselemente werden an vorhandenen Gelenken der Hauptarme, die vorzugsweise als Kugelgelenke ausgeführt sind, angebracht. Der Vorteil dieser Kugelgelenke mit passendem Gegenstück am Verbindungselement ist, dass diese Verbindung spielfrei ist, wenn beispielsweise das Gegenstück des Kugelgelenkes (genannt "Kugelpfanne") am Verbindungselement durch elastische Hilfsmittel wie Federn oder Spanngummis an das Kugelgelenk gedrückt wird. Ebenso ist es denkbar, die Kugelpfanne als Gelenk am Hauptarm und das Kugelgelenk am Verbindungselement auszuführen.

Das erfindungsgemäße Verfahren sieht in einer Variante vor, dass die Unterarmstäbe, die den Unterarm bilden, der wiederum an den Hauptarmen befestigt sind, als Verbindungselemente verwendet werden. Dabei werden diese teilweise von den Hauptarmen und teilweise von der Positionierplatte getrennt, um anschließend in der Lage sein zu können, jeweils zwei benachbarte Hauptarme mittels der Unterarmstäbe über die Gelenke zu verbinden und dabei die Hauptarme in die Kalibrierposition zu bewegen.

Diese Kalibrierposition ist eine Zwangsposition, die zum Einen durch die Lage und Abmessungen aller miteinander verbunden Komponenten festgelegt ist, wobei zum Anderen diese Position nicht veränderbar ist, da eine versuchte Auslenkung einer oder mehrerer Komponenten zu Gegenspannungen in diesem mechanischen System führt, die das Bestreben hat, die Komponenten wieder in die Kalibrierposition zurückzubewegen.

Im Folgenden wird ein vorteilhaftes Ausführungsbeispiel der Erfindung anhand einer Zeichnung näher dargestellt. Im Einzelnen zeigen:
- Fig. 1: eine Seitenansicht eines Ausführungsbeispiels des zu kalibrierenden Roboters mit einem Tragrahmen,
- Fig. 2: den in Figur 1 gezeigten Roboter ohne Tragrahmen für den Betrieb,
- Fig. 3: den in Figur 2 gezeigten Roboter in einer Kalibrierposition,
- Fig. 4: eine schematische Seitenansicht in einer Betriebsposition mit einem Hauptarm und Unterarm,
- Fig. 5: eine schematische Seitenansicht in einer Kalibrierposition mit einem Hauptarm und Unterarm, und
- Fig. 6: eine schematische Draufsicht mit Hauptarmen und Verbindungselementen in einer Kalibrierposition.

Gleiche Komponenten sind in den Figuren durchgängig mit gleichen Bezugszeichen versehen.

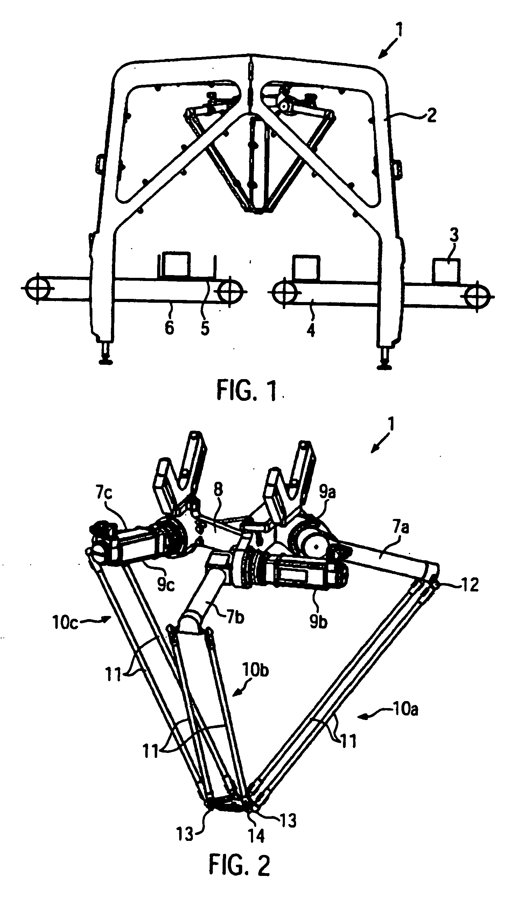

Figur 1 zeigt eine Seitenansicht eines Drei-Achsen-Deltaroboters 1 an einem Tragrahmen 2. Der Roboter 1 kann beispielsweise die Funktion ausführen, Produkte 3 von einem Zuführband 4 in einen Behälter 5, der sich auf einem Abführband 6 befindet, einzulegen.

In Figur 2 ist der Roboter 1 ohne Tragrahmen 2 gezeigt. Die Hauptarme 7a, 7b, 7c sind an dem Traggestell 8 gelagert und werden von Servomotoren 9a, 9b, 9c angetrieben. Für den Betrieb sind Unterarme 10a, 10b, 10c vorgesehen, die über je zwei Unterarmstäbe 11 verfügen, um mittels Gelenken 12 an dem Ende der Hauptarme 7a, 7b, 7c und Gelenken 13 an der Positionierplatte 14 eine Verbindung herzustellen, damit die Positionierplatte 14 über die Bewegung der drei Hauptarme 7a, 7b, 7c positioniert werden kann.

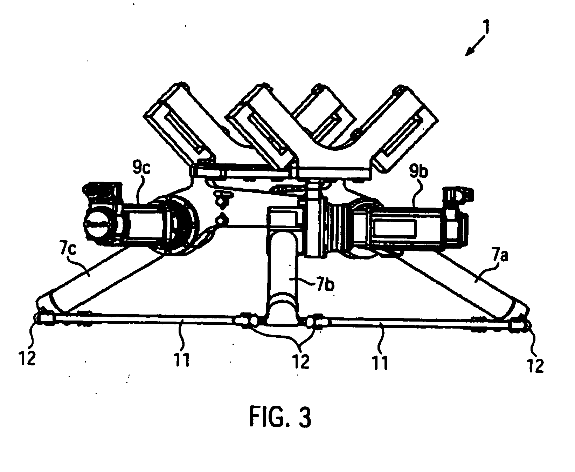

Figur 3 zeigt den Roboter 1 in seiner Kalibrierposition. Dabei sind die benachbarten Gelenke 12 der Hauptarme 7a, 7b, 7c über die drei Unterarmstäbe 11 miteinander verbunden. Bevor dieser Zustand erreicht wird, werden die Bremseinrichtungen, die sich vorzugsweise im Servomotor 9a, 9b, 9c oder auf der Servomotorachse befinden, deaktiviert. Dies kann über eine nicht dargestellte Steuerung durchgeführt werden. Somit ist der Bediener oder Monteur in der Lage, die Hauptarme 7a, 7b, 7c einzeln oder gemeinsam manuell zu bewegen. Dafür werden die Unterarmstäbe 11 teilweise von den Gelenken 12 an den Hauptarmen 7a, 7b, 7c und den Gelenken 13 an der Positionierplatte 14 getrennt, da zum Einen nur drei Unterarmstäbe 11 in der Kalibrierposition Verwendung finden und zum Anderen eine Verbindung zur Positionierplatte 14 nicht vorgesehen ist. Die Hauptarme 7a, 7b, 7c werden ungefähr in die in Figur 3 dargestellte Kalibrierposition bewegt und ein erster Unterarmstab 11 zwischen zwei benachbarte Hauptarme 7a, 7b angebracht. Hierzu kann es notwenig sein, den Unterarmstab 11 an dem Hauptarm 7a, 7b mittels einer beispielsweise nicht dargestellten elastischen Vorrichtung selbst haltend anzubringen. Anschließend wird der nächste Unterarmstab 11 in gleicher Weise an den Hauptarmen 7b, 7c angebracht. Wird der dritte und letzte Unterarmstab 11 zwischen den noch nicht miteinander verbunden Hauptarmen 7c, 7a angebracht, so ist dies nur in einer durch die Lage und Abmessungen der Hauptarme 7a, 7b, 7c, der Gelenke 12 und der Unterarmstäbe 11 definierten Position möglich. Diese Position ist vorzugsweise die Kalibrierposition.

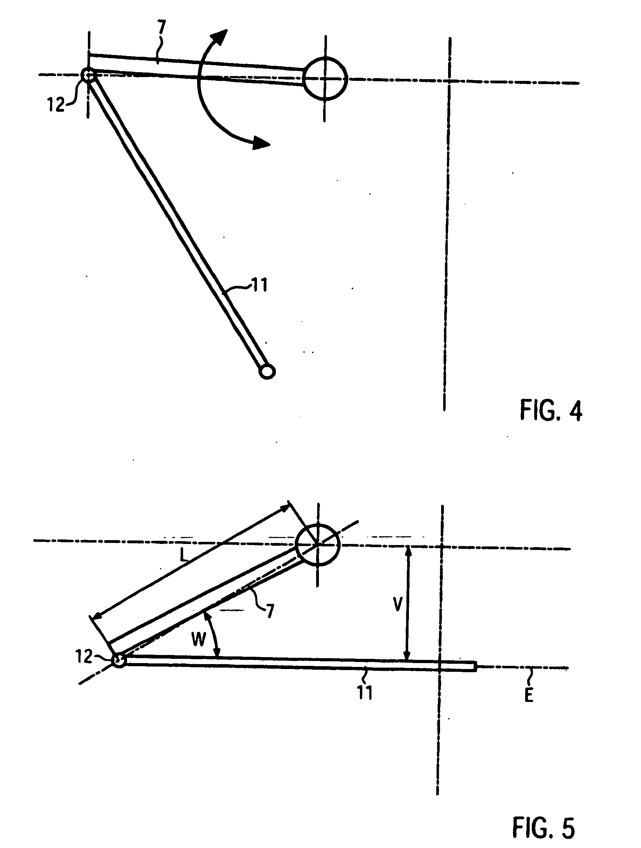

In Figur 4 ist eine schematische Seitenansicht eines Hauptarmes 7 mit dem am Ende angebrachten Gelenk 12 und damit verbunden Unterarmstab 11 gezeigt. Die Verbindung des Unterarmstabs 11 mit der Positionierplatte 14 ist hierbei nicht dargestellt,

Figur 5 zeigt eine schematische Seitenansicht der Kalibrierposition mit einem Hauptarm 7, einem Gelenk 12 und einem Unterarmstab 11. In dieser Position befinden sich die Gelenke 12 und die drei Unterarmstäbe 11 in einer gemeinsamen Ebene E, und diese ist parallel zu der Bezugsebene, in der sich die Drehachsen 15 der Hauptarme 7a, 7b, 7c befinden.

Dabei stellt sich für alle drei Hauptarme 7a, 7b, 7c ein Achswinkel W ein, und der Abstand der Ebene E und der Ebene, in der die Motorachsen liegen, ist als vertikaler Abstand V bezeichnet. Die Länge L der Hauptarme ist als Abstand des Mittelpunktes des Gelenkes 12 und der Drehachse 15 der Lagerung des Hauptarmes im Traggestell 8 definiert.

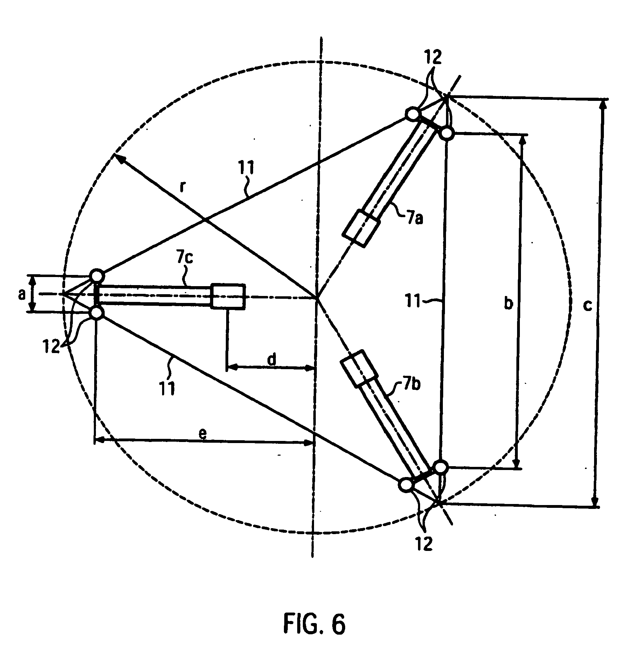

In Figur 6 ist eine schematische Draufsicht auf den Roboter 1 in der Kalibrierposition gezeigt. Bei einem Drei-Achsen-Deltaroboter bilden die Achsen der Unterarmstäbe 11 in ihrer gemeinsamen Ebene E ein gleichseitiges Dreieck. In dieser Ansicht sind weitere Abmessungen definiert:
a = Abstand zweier Mittelpunkte der Gelenke 12 am Ende der Hauptarme 7a, 7b, 7c
b = Länge Unterarmstab 11
c = Kantenlänge des gleichseitigen Dreiecks
d = Abstand der Achse des Servomotors, gleichzeitig auch Drehachse 15 der Lagerung des Hauptarmes, zur vertikalen Mittelachse des Roboters
e = Horizontaler Abstand der Mittelpunkte der Gelenke 12 zur vertikalen Mittelachse des Roboters
r = Radius durch die Eckpunkte des gleichseitigen Dreiecks
L = Länge Hauptarm 7a, 7b, 7c
W = Achswinkel Hauptarm 7a, 7b, 7c in Kalibrierstellung
V = vertikaler Abstand der Dreiecksebene zur Bezugsebene

Es bestehen folgende mathematischen Zusammenhänge:
c=2* a + b
r = Wurzel (1/3 * c hoch 2)
e = r - Wurzel (a hoch 2 * ¾)
W = ARCCOS((e - d) / L)
V = SIN(W) * L

Die Steuerung des Roboters beinhaltet eine Kinematiktransformation. In dieser können die Daten für a, b, d, L abgelegt werden. Über die mathematischen Zusammenhänge ergibt sich der Achswinkel W und kann in der Kalibrierposition mit den Meßsystemen der Servomotore 9a, 9b, 9c abgeglichen werden.

Für den Betrieb werden nach dem Kalibrieren die Verbindungen mittels der Unterarmstäbe 11 zwischen den Hauptarmen 7a, 7b, 7c wieder gelöst und alle Unterarmstäbe 11 entsprechend mit Hauptarmen 7a, 7b, 7c und Positionierplatte 14 verbunden.

Die Erfindung ist nicht auf das kalibrieren einer Drei-Achsen-Deltaroboters beschränkt, sondern es sind auch Roboter mit mehr als drei Hauptarmen 7A, 7b, 7c denkbar und/oder zusätzlichen Achsen, die eine Drehung des Produktes 3 ausführen können.

## Patentansprüche

1. Verfahren zum Kalibrieren eines Roboters (1) mit einem Traggestell (8) undmindestens drei beweglich relativ zum Traggestell (8) gelagerten Hauptarmen (7a, 7b, 7c) und mindestens drei Unterarmen (10a, 10b, 10c), die im Betrieb ieweils einen Hauptarm (7a, 7b, 7c) mit einer Positionierplatte (14) verbinden, **gekennzeichnet durch** das Abtrennen zumindes einiger Unterarme (10a, 10b, 10c) von den Hauptarmen (7a, 7b, 7c) oder der Positionierplatte (14), sodass eine freie Bewegung der Hauptarme (7a, 7b, 7c) möglich ist,
sowie **durch** das Bewegen der vom Traggestell (8) abgewandten äußeren Enden der Hauptarme (7a, 7b, 7c) in eine räumliche Stellung relativ zueinander und das Verbinden der äußeren Enden der Hauptarme (7a, 7b, 7c) mit Verbindungselementen (11) mit gleicher Länge, bis das Ende jedes Hauptarmes (7a, 7b, 7c) mit dem Ende zumindest eines benachbarten Hauptarmes (7a, 7b, 7c) verbunden ist.

2. Verfahren nach Anspruch 1, **dadurch gekennzeichnet, dass** jeder Hauptarm (7a, 7b, 7c) mit beiden Nachbarn verbunden ist.

3. Verfahren nach Anspruch 1 oder 2, **dadurch gekennzeichnet, dass** die Hauptarme manuell bewegt werden.

4. Verfahren nach einem der Ansprüche 1 bis 3, **dadurch gekennzeichnet, dass** die äußeren Enden der Hauptarme (7a, 7b, 7c) Gelenke (12) aufweisen, wobei jeweils die Gelenke (12) benachbarter Hauptarme (7a, 7b, 7c) mittels der Verbindungselemente (11) verbunden werden.

5. Verfahren nach einem der Ansprüche 1 bis 4, **dadurch gekennzeichnet, dass** die Enden der Hauptarme (7a, 7b, 7c) mit Unterarmen (10a, 10b, 10c) verbunden sind und jeder Unterarm (10a, 10b, 10c) zwei Unterarmstäbe (11) umfasst und die Unterarmstäbe (11) die Verbindungselemente (11) sind und zumindest ein Unterarmstab (11) von einem Gelenk (12) eines Hauptarmes (7a, 7b, 7c) gelöst wird.

## Claims

1. A method for calibrating a robot (1) with a load-bearing frame (8), at least three main arms (7a, 7b, 7c) mounted movably relative to the load-bearing frame (8) and at least three lower arms (10a, 10b, 10c), which in operation each connect a main arm (7a, 7b, 7c) to a positioning plate (14), **characterised by** separating at least some lower arms (10a, 10b, 10c) from the main arms (7a, 7b, 7c) or the positioning plate (14), such that free movement of the main arms (7a, 7b, 7c) is possible, moving the outer ends, remote from the load-bearing frame (8), of the main arms (7a, 7b, 7c) into a spatial position relative to one another and connecting the outer ends of the main arms (7a, 7b, 7c) with connecting elements (11) of identical length, until the end of each main arm (7a, 7b, 7c) is connected to the end of at least one neighbouring main arm (7a, 7b, 7c).

2. A method according to claim 1, **characterised in that** each main arm (7a, 7b, 7c) is connected to both of its neighbours.

3. A method according to claim 1 or claim 2, **characterised in that** the main arms are moved manually.

4. A method according to any one of claims 1 to 3, **characterised in that** the outer ends of the main arms (7a, 7b, 7c) comprise joints (12), wherein in each case the joints (12) of neighbouring main arms (7a, 7b, 7c) are connected by means of the connecting elements (11).

5. A method according to any one of claims 1 to 4, **characterised in that** the ends of the main arms (7a, 7b, 7c) are connected to lower arms (10a, 10b, 10c) and each lower arm (10a, 10b, 10c) comprises two lower arm rods (11) and the lower arm rods (11) are the connecting elements (11) and at least one lower arm rod (11) is detached from a joint (12) of a main arm (7a, 7b, 7c).

## Revendications

1. Procédé pour calibrer un robot (1) avec un châssis porteur (8), au moins trois bras principaux (7a, 7b, 7c) montés mobiles par rapport au châssis porteur (8), et au moins trois bras inférieurs (10a, 10b, 10c) qui, en fonctionnement, relient chacun un bras principal (7a, 7b, 7c) à une plaque de positionnement (14), **caractérisé par** la séparation d'au moins quelques bras inférieurs (10a, 10b, 10c) des bras principaux (7a, 7b, 7c) ou de la plaque de positionnement (14), de sorte qu'un mouvement libre des bras principaux (7a, 7b, 7c) est possible,
et par le déplacement des extrémités extérieures des bras principaux (7a, 7b, 7c) opposées au châssis porteur (8) jusqu'à une position spatiale les unes par rapport aux autres, et par la liaison des extrémités extérieures des bras principaux (7a, 7b, 7c) avec des éléments de liaison (11) de même longueur, jusqu'à ce que l'extrémité de chaque bras principal (7a, 7b, 7c) soit reliée à l'extrémité d'au moins un bras principal (7a, 7b, 7c) voisin.

2. Procédé selon la revendication 1, **caractérisé en ce que** chaque bras principal (7a, 7b, 7c) est relié aux deux voisins.

3. Procédé selon la revendication 1 ou 2, **caractérisé en ce que** les bras principaux sont déplacés manuellement.

4. Procédé selon l'une des revendications 1 à 3, **caractérisé en ce que** les extrémités extérieures des bras principaux (7a, 7b, 7c) présentent des articulations (12), étant précisé que les articulations (12) de bras principaux (7a, 7b, 7c) voisins sont reliées à l'aide des éléments de liaison (11).

5. Procédé selon l'une des revendications 1 à 4, **caractérisé en ce que** les extrémités des bras principaux (7a, 7b, 7c) sont reliées aux bras inférieurs (10a, 10b, 10c), chaque bras inférieur (10a, 10b, 10c) comprend deux barres de bras inférieur (11), les barres de bras inférieur (11) constituent les éléments de liaison (11), et au moins une barre de bras inférieur (11) est détachée d'une articulation (12) d'un bras principal (7a, 7b, 7c).
